# EUROPÄISCHE PATENTSCHRIFT

(11) **EP 2 790 394 B1**
(45) Veröffentlichungstag und Bekanntmachung des Hinweises auf die Patenterteilung: **22.11.2017**
(21) Anmeldenummer: 14000803.8
(22) Anmeldetag: 06.03.2014
(51) Int. Cl.: H04M 3/523, H04M 3/42, H04M 3/51, H04L 12/24, H04M 7/00, H04L 29/08

(54) **Verfahren und Vorrichtung zur Verwaltung eines Wiederholungsanrufs an ein Callcenter**
Method and device for managing a repeat call to a call centre
Procédé et dispositif d'administration d'un appel répété à un centre d'appels

(30) Priorität: 12.04.2013 DE 102013006351
(43) Veröffentlichungstag der Anmeldung: 15.10.2014
(73) Patentinhaber: Unify GmbH & Co. KG, 80807 München (DE)
(72) Erfinder: Tietsch, Michael, 86916 Kaufering (DE)
(74) Vertreter: Fritzsche, Thomas

(56) Entgegenhaltungen:
- EP-A2- 1 100 250
- GB-A- 2 481 451
- US-A- 6 154 528
- US-A1- 2012 224 681

## Beschreibung

Die Erfindung betrifft ein Verfahren und eine Vorrichtung zur Verwaltung eines Anrufs an ein Callcenter.

Callcenter haben sich in den letzten Jahrzehnten zunehmend durchgesetzt, um den Kundenkontakt eines Untemehmens zentral zu handhaben. Callcenter werden zu vielfältigen Zwecken eingesetzt wie etwa für Auftragsakquise, Auftrags- und Bestellannahme, technischen Kundendienst, Beschwerdemanagement, Notfalldienst, Meinungsforschung, Auskunft und Information, um nur einige zu nennen. Mitarbeiter eines Callcenters im Kundenkontakt werden im Rahmen dieser Anmeldung als Agenten bezeichnet. Die Agenten eines Callcenters sind in der Regel mit einem Bildschirmarbeitsplatz und einer Sprechgarnitur ausgestattet. Die Verbindung mit einem Telefonnetz wird über eine Telefonanlage (PBX - engl. Private Branch Exchange) hergestellt. Zunehmend werden auch Anrufe über das Internet vermittelt (VoIP - engl. Voice over IP).

Beispielsweise im Fall einer Service-Hotline tritt oft der Fall ein, dass ein Kunde mehrere Anrufe tätigen muss, bevor ein Problem ("Vorgang") gelöst werden kann. In vielen Fällen ist es auch von vonherein bekannt bzw. zu erwarten, dass weitere Anrufe erforderlich sein werden. In diesen Fällen ist es zumindest aus Sicht des Kunden wünschenswert, dass diese Anrufe gezielt an den Hotline-Mitarbeiter (Agenten) geleitet werden, mit dem man den Vorgang im ersten Anruf begonnen hat. Da nur dieser Agent die Vorgeschichte kennt und nahtlos aufsetzen kann, ist hier die effektivste Hilfe zu erwarten. Diese Wunschvorstellung kann nicht immer optimal umgesetzt werden.

EP 1 100 250 A2 offenbart ein Verfahren zum Speichern von Informationen zu einer Telefonie-Session. Ein Anrufer, der ein Callcenter anruft, wird mit einem bestimmten Agenten des Callcenters verbunden, wobei der Agent eine Anwendung instruieren kann, ein Cookie auf dem Client Server zu speichern, welches den Namen des Agenten enthält sowie Informationen über das Problem des Anrufers. Das auf dem Client Server gespeicherte Cookie dient dazu, dass der Anrufer den mit seinem Problem bereits zuvor betrauten Agenten im Falle eines wiederholten Anrufs direkt anrufen kann.

Die optimale Anrufverteilung ist für den Betreiber eines Callcenters sehr wichtig, um Kundenzufriedenheit und Wirtschaftlichkeit (Auslastung) in Einklang zu bringen. Ein Mittel zur Effizienzsteigerung ist die Interaktive Anrufbeantwortung (IVR - engl. Interactive Voice Response). Dabei arbeitet sich der Kunde durch eine Reihe von IVR-Abfragen (etwa per Sprach- oder Zifferneingabe), bis er zur zuständigen Fachgruppe gelangt. Spätestens hier wird er oft mit dem nächsten freien Agenten verbunden. Dies ist bei jedem Anruf, egal ob es sich um den allerersten Anruf oder einen Folgeanruf handelt, gleich. Daher landet der Kunde meist bei einem anderen Agenten als dem ersten Agenten, mit dem er gesprochen hat. Daraufhin muss wieder erklärt werden, wer man ist, Kundennummer usw. und worum es geht. Bei komplexeren Vorgängen, die erst unvollständig abgearbeitet sind, wird der zufällig erreichte Agent möglicherweise versuchen, den Kunden mit dem Agenten zu verbinden, der den Vorgang bisher bearbeitet hat. Da sich dieser Agent aber häufig selbst in einem anderen Kundengespräch befindet, führt diese ganze Vorgehensweise zu beträchtlichen Verzögerungen, Effizienzeinbußen und nicht zuletzt zu einem negativen Eindruck beim Kunden.

Eine Verbesserung bietet die computergestützte Telefonintegration (CTI - engl. Computer Telephony Integration). Dabei wird der Anrufer durch die eingehende Telefonnummer oder die Eingabe von Kontonummer oder einer PIN im IVR-System identifiziert. So kann die Kundenhistorie mit Beginn des Gesprächs am Bildschirm dem Agenten angezeigt werden. Der Agent kennt so Vorgänge, die der Anrufer bereits mit anderen Mitarbeitern besprochen hat, und ist nicht genötigt, den Kunden erneut zu befragen oder intern Rücksprache zu nehmen. Der Bearbeitungsprozess wird erheblich beschleunigt (Zeitersparnis). Die empfundene Servicequalität ist allerdings von der dokumentierten Historie abhängig, letztlich von der Eingabemaske, die Vorgesetzte oder Projektleiter erstellt hatten. Auch ist es für den neu verbundenen Agenten zeitaufwändig, sich durch die Kundenhistorie ins Bild zu setzen.

Günstiger wäre es, wenn man im Rahmen eines Vorgangs immer wieder denselben Agenten oder wenigsten seinen Stellvertreter erreichen würde und dieser auch gleich Zugriff auf die Unterlagen des Vorgangs erhielte.

Eine wichtige Randbedingung erschwert jedoch die einfache Realisierung: Es ist nämlich häufig unerwünscht, dass ein Agent beliebig direkt anrufbar ist, weshalb seine persönlichen Kontaktdaten (Telefonnummer/Durchwahl) dem Anrufer nicht mitgeteilt werden (dürfen). Es kann jedoch auch der umgekehrte Fall eintreten, nämlich dass der Anrufer selbst anonym bleiben möchte. Beispiele hierfür sind die Telefonseelsorge und die Polizei (z.B. Notruf-Hotline). Bei Anwendungen wie der Telefonseelsorge kann es sogar sein, dass beide Seiten anonym bleiben sollen. Bei Anwendungen wie der Polizei wäre es z.B. für einen Zeugen, der unerkannt bleiben, aber Hinweise zu einem laufenden Fall geben möchte, wünschenswert, sich über die Notruf-Nummer immer wieder direkt mit "seinem" Kontaktbeamten verbinden zu lassen, ohne sich spezielle Rufnummern notieren zu müssen. Spezielle Lösungen können auch daran scheitern, dass Anrufer oft von einer Vielzahl unterschiedlicher Endgeräte aus (Festnetztelefon, öffentlicher Münzfernsprecher, Handy, PDA, PC ...) mit dem Callcenter in Kontakt treten.

Es ist eine Aufgabe der vorliegenden Erfindung, die Nachteile im Stand der Technik wenigstens teilweise zu beseitigen. Insbesondere besteht eine Aufgabe der vorliegenden Erfindung darin, ein Verfahren und eine Vorrichtung zur Verwaltung eines Anrufs oder von Anrufen an ein Callcenter zu schaffen, das es ermöglicht, dass ein Anrufer im Rahmen eines Vorgangs immer wieder denselben Agenten oder seinen Stellvertreter erreicht, wobei die Anonymität des Agenten gegenüber dem Anrufer gewahrt bleibt. Eine weitere Aufgabe der Erfindung besteht darin, ein Verfahren und eine Vorrichtung zur Verwaltung eines Anrufs oder von Anrufen an ein Callcenter zu schaffen, das es ermöglicht, dass ein Anrufer im Rahmen eines Vorgangs immer wieder denselben Agenten oder seinen Stellvertreter erreicht, wobei die Anonymität des Anrufers gegenüber dem Agenten gewahrt bleibt.

Die Aufgabe wird erfindungsgemäß durch die Merkmale der unabhängigen Ansprüche 1 und 10 gelöst. Vorteilhafte Ausführungsformen, Ausgestaltungen und Weiterentwicklungen der Erfindung sind in den Unteransprüchen angegeben.

Gemäß einem Gesichtspunkt der Erfindung wird ein Verfahren zur Verwaltung eines Anrufs eines Anrufers an ein Callcenter, vorgeschlagen, welches die Schritte aufweist:
- Definieren eines den Anruf entgegennehmenden Agenten des Callcenters als zuständigen Agenten für einen dem Anruf zugeordneten Vorgang;
- Anlegen einer Relation zwischen dem zuständigen Agenten und dem Vorgang;
- Erzeugen eines Tokens, welches eine Adressierung der Relation ermöglicht, wobei das Token frei von individuellen verbindungs- oder personenbezogenen Daten des zuständigen Agenten ist, wobei die Adressierung für den Anrufer verdeckt ist;
- Verfügbarmachen des Tokens für den Anrufer so, dass das Token bei einer erneuten Kontaktaufnahme des Anrufers mit dem Callcenter aktiviert werden kann;
- Vermitteln des Anrufers zu dem zuständigen Agenten oder einen Stellvertreter, wenn das Token während der erneuten Kontaktaufnahme aktiviert wird.

Unter einem Callcenter wird im Sinne der Erfindung eine Organisationseinheit eines Unternehmens mit einer Vielzahl von Telefonarbeitsplätzen, die über eine zentrale Telefonnummer oder URL erreichbar sind, verstanden. Unter einem Agenten wird im Sinne der Erfindung ein Mitarbeiter des Callcenters verstanden, der einen der Vielzahl der Telefonarbeitsplätze nutzt. Unter einem Vorgang wird das dem Anruf zu Grunde liegende Thema bzw. der Sachverhalt, der in dem Anruf besprochen wird, verstanden. Der den Anruf entgegennehmende Agent, der als zuständiger Agent definiert wird, kann der erste Agent sein, der mit dem Vorgang befasst ist, es kann aber auch ein anderer Agent sein, etwa weil der erste Agent langfristig nicht verfügbar ist, eine bleibende Verstimmung zwischen dem ersten Agenten und dem Anrufer eingetreten ist, oder aus anderen Gründen. Unter einer Relation wird im Sinne der Erfindung eine Datenstruktur verstanden, die Informationen enthält, welche eine Zuordnung kann noch weitere Informationen enthalten, etwa Kopf- und Finalisierungsdaten, funktionale Bestandteile und andere. Verbindungs- oder personenbezogene Daten des zuständigen Agenten können alle Daten sein, die eine direkte Zuordnung zu einem bestimmten Agenten innerhalb des Telefonnetzes bzw. der Firmenstruktur eines Betreibers des Callcenters ermöglichen, wie etwa Durchwahl, Abteilung, Arbeitsgruppe, Namen, Personalnummer, etc. Unter einem Aktivieren des Tokens ist im Sinne der Erfindung zu verstehen, dass mit Hilfe des Tokens auf die Relation zugegriffen wird. Unter einer erneuten Kontaktaufnahme wird insbesondere ein erneuter Anruf verstanden; denkbar ist aber auch ein Rückruf des Callcenters auf Veranlassung des Anrufers oder durch einen automatisierten Vorgang. Durch Verfügbarmachen des Tokens und damit die (für den Anrufer verdeckte) Adressierung der Relation zwischen dem Vorgang und dem zuständigen Agenten und die anschließende Vermittlung des Anrufers mit dem zuständigen Agenten, kann erreicht werden, dass ein Anrufer im Rahmen eines Vorgangs immer wieder denselben Agenten oder seinen Stellvertreter erreicht, wobei die Anonymität des Agenten gegenüber dem Anrufer gewahrt bleibt.

In einer bevorzugten Ausführungsform der Erfindung umfasst der Schritt des Verfügbarmachens eine Übermittlung des Tokens an ein Endgerät des Anrufers, wobei die Aktivierung des Tokens eine Rückübermittlung des Tokens an das Callcenter umfasst. Bei dieser Ausführungsform kann das Token an dem Endgerät des Anrufes aktiviert werden. Hierdurch können auch Funktionsmerkmale des jeweiligen Endgeräts so ausgenutzt werden, dass der Zugriff des Anrufers auf die Relation zwischen dem Vorgang und dem zuständigen Agenten für den Anrufer möglichst bequem ist.

In einer bevorzugten Ausgestaltung dieser Ausführungsform der Erfindung erfolgt die Übermittlung des Tokens in Form eines Cookies, wobei das Cookie auf einem Endgerät des Anrufers gespeichert wird. Die Rückübermittlung des in dem Cookie enthaltenen Tokens an das Callcenter bei einem erneuten Anruf des Anrufers erfolgt vorzugsweise automatisch. Unter einem Cookie wird im Sinne der Erfindung eine Datei verstanden, die zur Speicherung auf dem Endgerät des Anrufers bestimmt ist. Ein Cookie weist in der Regel funktionale Inhalte sowie Inhalte auf, die eine Selbstaktivierung bestimmter Funktionen des Cookies bei Eintreten bestimmter Bedingungen ohne Zutun des Benutzers des Endgeräts steuern.

In einer weiteren bevorzugten Ausgestaltung erfolgt die Übermittlung des Tokens in Form einer SMS, wobei die SMS zur Aktivierung des Tokens an das Callcenter zurückgesendet wird. Dabei kann vorgesehen sein, dass eine Rücksendung der SMS einen Rückruf des Callcenters beim Anrufer auslöst.

In einer noch weiteren bevorzugten Ausgestaltung erfolgt die Übermittlung des Tokens als Zeichenfolge in einer an einem Endgerät des Anrufers optisch oder akustisch wahrnehmbaren Form, wobei die Rückübermittlung des Tokens bei einem erneuten Anruf des Anrufers in Form einer Eingabe der Zeichenfolge in Text- oder Sprachform am Endgerät des Anrufers durch den Anrufer erfolgt. Mit anderen Worten, das Token enthält beispielsweise eine Zeichenkette, die auf einem Display eines Telefons angezeigt oder dem Anrufer durch den Agenten oder ein Sprachsynthesesystem vorgelesen wird. Bei einem erneuten Anruf des Anrufers ist diese Zeichenkette entweder am Endgerät des Anrufers einzugeben (wählen, eintippen). Dadurch ist das Verfahren auch an einfachen Endgeräten umsetzbar.

In einer vorteilhaften Weiterbildung der Erfindung enthält das Token eine spezielle Rufnummer, die bei einem erneuten Anruf durch den Anrufer zu wählen ist.

In einer alternativen bevorzugten Ausführungsform der Erfindung umfasst der Schritt des Verfügbarmachens die Schritte:
- Erzeugen des Tokens in Form einer zum Verbleib beim Callcenter bestimmten Voice-Tokens;
- Auffordern des Anrufers, eine Sprachprobe zu hinterlassen, wobei die Sprachprobe eine dem Anrufer vorgegebene oder von dem Anrufer selbst gewählte Passphrase enthält; und
- Speichern der hinterlassenen Sprachprobe zusammen mit einer Verknüpfung zu dem Voice-Token auf der Seite des Callcenters,
wobei der Schritt des Aktivierens des Tokens die Schritte umfasst:
- Abfragen der Passphrase von dem Anrufer bei einem erneuten Anruf; und
- Aufrufen der Verknüpfung mit dem Voice-Token auf der Seite des Callcenters, wenn die von dem Anrufer bei dem erneuten Anruf gesprochene Passphrase zu der gespeicherten Sprachprobe passt.

Als Voice-Token wird ein Token verstanden, das durch Übermitteln und Verifizieren von Sprachproben aktivierbar ist. Mit dieser Ausführungsform kann das Verfahren ganz unabhängig vom Endgerät und der jeweiligen Gesprächssituation des Anrufers umgesetzt werden. Auch kann die vollständige Anonymität des Anrufers gewahrt bleiben.

In einer vorteilhaften Weiterbildung der Erfindung werden auf eine Aktivierung des Tokens bei einer erneuten Kontaktaufnahme hin Informationen zu dem Vorgang an den zuständigen Agenten oder den Stellvertreter übermittelt. Dadurch hat der Agent bzw. sein Stellvertreter ohne weiteres Zutun unmittelbar Zugriff auf die Unterlagen des Vorgangs.

In einer weiteren vorteilhaften Weiterbildung der Erfindung wird das Token invalidisiert, wenn der Vorgang als abgeschlossen gekennzeichnet ist. Dabei kann auch eine manuelle Invalidisierung des Tokens durch den Agenten ermöglicht werden. Vorzugsweise berücksichtigt die Invalidisierung eine vorgegebene oder durch den Agenten wählbare Karenzzeit. Unter einer Invalidisierung kann eine Kennzeichnung des Tokens als ungültig, eine Löschung des Tokens oder dergleichen verstanden werden. Wenn das Token von dem System des Callcenters gelöscht oder als ungültig gekennzeichnet ist, wird ein weiterer Anruf unter Angabe dieses Tokens wie ein Anruf ohne Aktivierung eines Tokens behandelt und normal in die Warteschlange eingereiht werden. In Fällen, in denen das Token auf dem Endgerät des Anrufers gespeichert wurde, kann eine Löschung des Tokens auch von dem Endgerät des Anrufers selbst erfolgen, sodass das Token bei einem erneuten Anruf nicht mehr aktiviert werden kann. Eine manuelle Invalidisierung kann beispielsweise wünschenswert sein, wenn der zuständige Agent sich persönlicher Belästigungen oder Beleidigungen ausgesetzt sieht. Eine Karenzzeit bedeutet im Sinne der Erfindung, dass die Invalidisierung zwar vorgemerkt wird, aber erst nach Verstreichen der Karenzzeit umgesetzt wird. Dadurch kann die Möglichkeit eröffnet werden, dass ein Kunde auch zu einem an sich abgeschlossenen Vorgang noch eine gewisse Zeit lang Nachfragen stellen kann und zum gleichen Agenten verbunden wird.

Gemäß einem weiteren Gesichtspunkt der vorliegenden Erfindung wird eine Vorrichtung zur Verwaltung eines Anrufs eines Anrufers an ein Callcenter, die zur Vermittlung eines Anrufs aus wenigstens einem Fernkommunikationsnetz an mehrere Agenten-Arbeitsplätze ausgebildet und eingerichtet ist, vorgeschlagen. Erfindungsgemäß ist die Vorrichtung zur Ausführung der Verfahrensschritte des oben beschriebenen Verfahrens ausgebildet und eingerichtet. Die Aufgabe der vorliegenden Erfindung wird durch diese Vorrichtung aus denselben Gründen gelöst, wie diese weiter oben für das entsprechende Verfahren angegeben wurden. Als Vorrichtung zur Ausführung des Verfahrens kann ein an sich bekanntes und an sich vorhandenes, speziell programmiertes Gerät wie etwa ein Router, eine Telefonanlage, ein Server oder dergleichen, ein speziell bereitgestelltes und ausgelegtes Gerät oder ein lokales Netz insgesamt mit auf mehrere Geräte verteilten Funktionalitäten zur Ausführung einzelner Verfahrensschritte verstanden werden.

Es versteht sich, dass das erfindungsgemäße Verfahren auch durch ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, durch ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf den Computer ausgeführt wird, aufweist, oder durch ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein kann.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

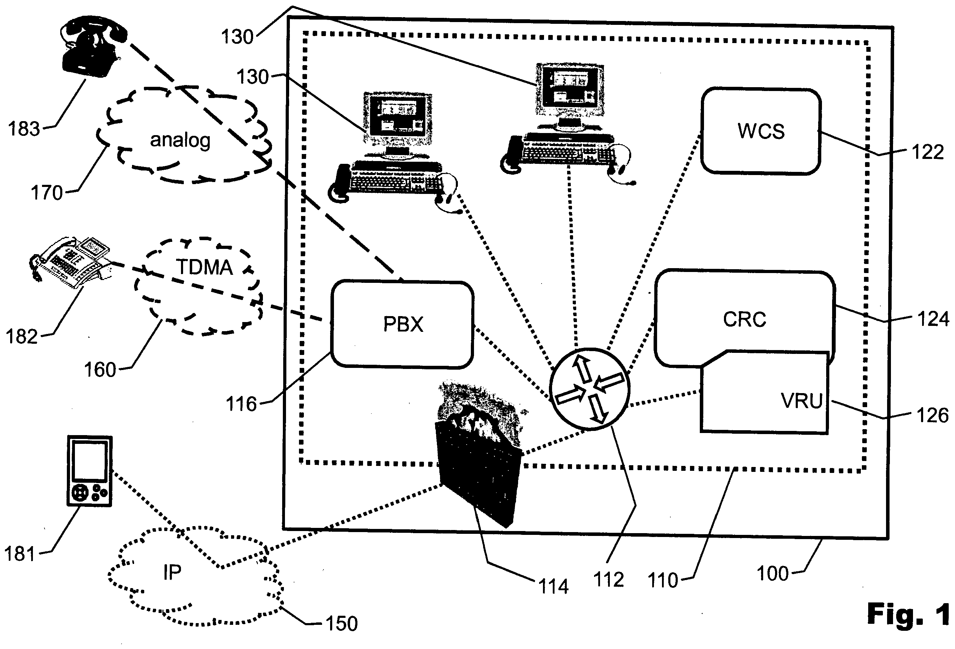

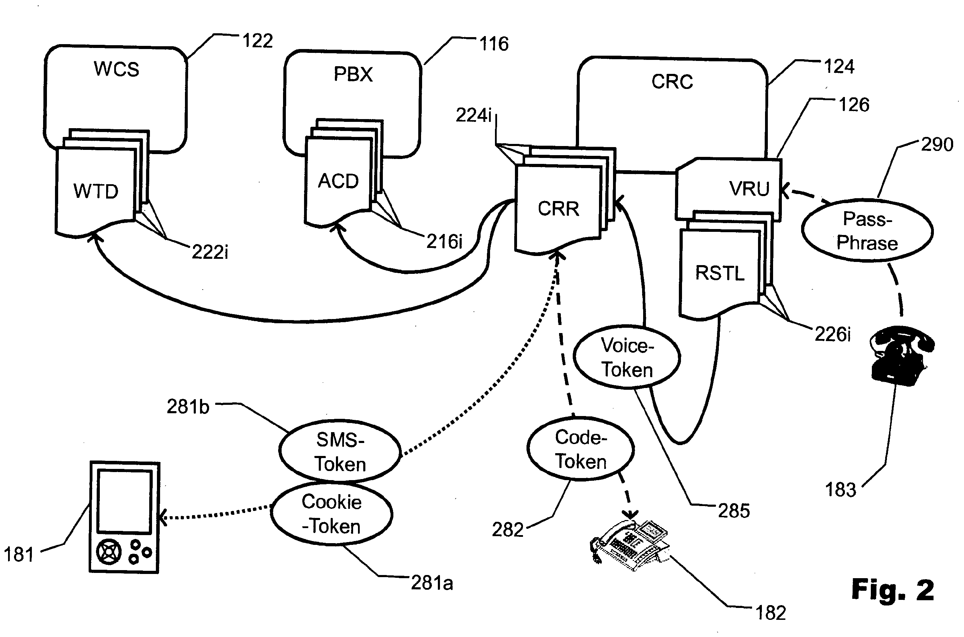

Im Folgenden wird die Erfindung anhand bevorzugter Ausführungsbeispiele und mit Hilfe von Figuren näher beschrieben. Dabei
- ist Fig. 1: eine schematische Darstellung eines Callcenter mit einem lokalen Netz und einigen externen Instanzen; und
- ist Fig. 2: eine schematische Darstellung einiger Komponenten des lokalen Netzes und der externen Instanzen in weiterem Detaillierungsgrad und mit funktionalen bzw. prozessualen Zusammenhängen.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

### <Grundlegendes Ausführungsbeispiel>

Fig. 1 zeigt in einer schematischen Darstellung eines Callcenter 100 mit einem lokalen Netz (LAN - Local Area Network) 110 und einigen externen Instanzen aus physischer Sicht.

Gemäß der Darstellung in Fig. 1 weist das LAN 110 des Callcenters 100 einen Router 112 auf, der auf dem Internet-Protokoll IP basiert. Der Router 112, der auch als Layer 3-Switch bezeichnet wird [Layer 3 ist die Vermittlungsschicht gemäß dem OSI-Modell (OSI: Open Systems Interconnection Reference Model)], ist die zentrale Verteilstelle aller Datenströme in dem LAN 110. Mit dem Router 112 über IP-Verbindungen verbunden und damit innerhalb des LAN 110 untereinander verbunden sind eine Firewall 114, ein Telefonvermittlungssystem (PBX - Private Branch Exchange) 116, das beispielsweise als Gateway ausgeführt ist oder ein Gateway umfasst, eine Arbeitsablaufsteuerung (WCS - Workflow Control System) 122, eine Anrufbeziehungssteuerung (CRC - Call Relationship Controller) 124, eine Spracherkennungseinheit (VRU - Voice Recognition Unit) 126 und eine Mehrzahl von Agenten-Arbeitsplätzen 130. Die VRU 126 ist in dem vorliegenden Ausführungsbeispiel der CRC 124 zugeordnet, kann aber auch eigenständig vorgesehen oder einer anderen Einheit innerhalb des LAN 110 zugeordnet sein. Die Anrufbeziehungssteuerung 124 und die Spracherkennungseinheit 126 können auch jeweils direkt, also ohne Durchlaufen des Routers 112, mit dem Telefonvermittlungssystem 116 verbunden sein (nicht dargestellt). Der zumindest eine Agenten-Arbeitsplatz 130, die Anrufbeziehungssteuerung 124, und die Arbeitsablaufsteuerung 122, können miteinander auch direkt, also ohne Durchlaufen des Routers 112, verbunden sein (nicht dargestellt).

Der Router 112 ist über die Firewall 114 mit einem externen Netz (hier dem Internet) 150 verbunden.

Das Telefonvermittlungssystem 116 ist mit einem oder mehreren Telefonnetzen wie etwa einem zeitschlitzgesteuerten (TDMA - Time Division Multiple Access) Netz 160 und einem analogen Telefonnetz 170 verbunden. Beispielhaft für eine Vielzahl von externen Kommunikationseinheiten sind ein mit dem Internet 150 verbundenes IP-Endgerät (Smartphone) 181, ein mit dem TDMA-Netz 152 verbundenes TDMA-Endgerät (Telefon) 182 und ein mit dem analogen Telefonnetz 153 verbundenes, analoges Endgerät (Telefon) 183 dargestellt. Eine Vielzahl anderer Endgeräte kann, je nach ihrer Vermittlungstechnik, mit dem Internet 150, dem TDMA-Netz 160 oder dem analogen Telefonnetz 170 verbunden sein. In einer Vermittlungsumgebung, in der nur ein TDMA-Netz 160 zur Verfügung steht, können analoge Endgeräte über lokale Signalumsetzer (nicht näher dargestellt) direkt mit dem TDMA-Netz 160 verbunden sein. Eine Verbindung des Telefonvermittlungssystems 116 mit einem analogen Telefonnetz entfällt in diesem Fall.

Das Telefonvermittlungssystem 116 stellt Umwandlungsdienste von analogen und digitalen (insbesondere zeitschlitzgesteuerten) Telefonsignalübertragungsformaten in das paketorientierte Internet Protokoll (IP) bereit. Die Arbeitsablaufsteuerung (WCS) 122, die Anrufbeziehungssteuerung (CRC) 124 und die Spracherkennungseinheit (VRU) 126 können als separate Recheneinheiten oder als Dienste, die auf einer Recheneinheit (etwa einem zentralen Server) zusammengefasst bzw installiert sind, ausgebildet sein. Der zentrale Server kann auch das Telefonvermittlungssystem 116 enthalten. Die Agenten-Arbeitsplätze 130 sind mit einer Recheneinheit und daran angeschlossenen Peripheriegeräten, nämlich insbesondere einem Monitor, einer Tastatur, einer Computermaus und einer Sprech-Hör-Einheit ausgestattet. Die Recheneinheiten der Agenten-Arbeitsplätze 130 können als voll ausgestattete Arbeitsplatzrechner oder als Client-Rechner, die Zugriff auf Anwendungsprogramme eines zentralen Servers aufweisen, ausgebildet sein.

Fig. 2 zeigt einige Komponenten des LAN 110 und externe Instanzen in weiterem Detaillierungsgrad und mit funktionalen bzw. prozessualen Zusammenhängen.

Gemäß der Darstellung in Fig. 2 ist der Arbeitsablaufsteuerung (WCS) 122 eine Sammlung von Arbeitsablauf- und Transaktionsdateien (WTD - Workflow/Transaction Data) 222i zugeordnet, ist dem Telefonvermittlungssystem (PBX) 116 eine Sammlung von Agentenvertragsdateien (ACD - Agent Contract Data) 216i zugeordnet, ist der Anrufbeziehungssteuerung 124 eine Sammlung von Anrufbeziehungsdateien (CRR - Call Relationship Repository) 224i zugeordnet und ist der Spracherkennungseinheit 126 eine Sammlung von aufgezeichneten Sprachproben und Token-Verknüpfungen (RSTL - Recorded Sample and Token Link) 226i zugeordnet.

### <Verfahrensablauf>

Anhand der Darstellung des Systems in Fign. 1 und 2 wird nun ein Verfahrensablauf zur Verwaltung bzw. Vermittlung eines Anrufs erläutert.

### <Gesprächseinleitung>

Wenn ein Anruf eines Anrufers an das Callcenter 100 über die PBX 116 oder den Router 112 entgegengenommen wird und eine Zuordnung zu einem Vorgang bzw. einem zuständigen Agenten nicht möglich ist, wird der Anruf an einen freien Agenten gemäß einer hier nicht weiter betrachteten Warteschlangenroutine, ggf. durch ein IVR-Verfahren unterstützt, vermittelt. Hierdurch wird der freie Agent als zuständiger Agent definiert. Es wird ein Vorgang als WTD 222i angelegt und in der WCS 122 abgelegt. Gleichzeitig wird für den zuständigen Agenten eine ACD 216i angelegt und in der PBX 116 angelegt. Nachstehend wird der zuständige Agent nur noch als "der Agent" bezeichnet.

Im Verlauf des Gesprächs stellt sich heraus, dass vermutlich weitere Gespräche erforderlich sein werden. Daraufhin veranlasst der Agent per Mausklick, Tasteneingabe, Sprachbefehl oder dergleichen an seinem Agenten-Arbeitsplatz 130 (Fig. 1), dass in der CRC 124 eine Relation zwischen dem Vorgang (WTD 222i) und der Vertragsdatei ACD 216i des Agenten erzeugt und als CRR 224i abgelegt wird und ein Token, mit dem diese Relation adressiert werden kann, erzeugt wird. Mit anderen Worten, das Token ist so beschaffen, dass der Agent und der Vorgang im Workflow des IT-Systems später identifiziert werden können. Das Token enthält selbst aber keine verbindungs- oder personenbezogene Daten.

Das Token kann eine spezielle Rufnummer, ein Schlüssel oder dergleichen sein. Wenn das Token entsprechend "zufällig" erstellt wird (Hashwert), ist Missbrauch (Verwendung von Nachbarnummern) unwahrscheinlich. Es ist auch möglich, die Nummer des Anrufers (Calling Party Number) bei der Erstellung des Tokens auszuwerten, um nur Anrufe vom ursprünglichen (den ersten Anruf initüerenden) Kommunikationsgerät aus zu ermöglichen. Es versteht sich, dass diese Auswertung nur in Anwendungen zum Tragen kommen kann, in denen die Anonymität des Anrufers nicht gewahrt bleiben muss.

Der weitere Ablauf einschließlich der Form und des Inhalts des Tokens hängt nun davon ab, von welchem Endgerät aus der Anrufer angerufen hat.

### <Bereitstellung und Aktivierung des Tokens>

Falls der Anrufer von einem cookie-fähigen High-TechEndgerät wie etwa dem IP-Endgerät 181, das hier stellvertretend für einen Web-Browser, ein IP-Telefon, ein internetfähiges Mobiltelefon (Smartphone), einen Tablett-PC oder dergleichen steht, beim Callcenter angerufen hat, wird das Token in einen Cookie (als Cookie-Token) 281a eingebettet. In dieser Form wird das Token als Cookie-Token 281a dem Anrufer zugestellt. Der Cookie wird selbsttätig beim Endgerät 281 des Anrufers gespeichert und ist so programmiert, dass er bei einem erneuten Anruf beim Callcenter 100 automatisch aufgerufen und das Token damit aktiviert wird. Die Aktivierung des Tokens bedeutet in diesem Fall, dass das Token während des erneuten Anrufs an das Callcenter 100 übermittelt wird. Dies kann ohne Wissen des Anrufers, alternativ auch unter Benachrichtigung des Anrufers geschehen.

Falls der Anrufer von einem SMS-fähigen High-Tech Endgerät wie etwa dem IP-Endgerät 181 angerufen hat, kann das Token anstelle eines Cookies auch in eine SMS eingebettet und dem Anrufer in dieser Form als SMS-Token 281b zugestellt werden. Zur Aktivierung des Tokens sendet der Anrufer die SMS (das SMS-Token 281b) an das Callcenter zurück. Dadurch wird unter Verwendung der in dem SMS-Token 281b enthaltenen Rufnummer oder URL ein Rückruf des Callcenters 100 beim Anrufer veranlasst.

Falls der Anrufer von einem Low-Tech-Endgerät mit der Fähigkeit der Nachrichtenanzeige auf einem Display oder dergleichen wie etwa dem TDMA-Endgerät 182, das stellvertretend für ein analoges Festnetz-Telefon, Mobiltelefon oder dergleichen steht, angerufen hat, wird das Token in eine TDMA-kodierte Signalfolge mit Zeichencode als Code-Token (ASCII-Code oder dergleichen) 282 umgewandelt und an das Endgerät in einer Form übertragen, die das Endgerät 182 veranlasst, die Signalfolge als Zeichenfolge auf dem Display oder dergleichen anzuzeigen. Der Anrufer wird aufgefordert, sich die auf dem Display erscheinende Zeichenfolge zu notieren. Das Token kann eine spezielle Rufnummer sein oder eine andere Zeichenfolge sein. Bei einem Wiederanruf wählt der Anrufer entweder die spezielle Rufnummer oder gibt per Nachwahl (DTMF) das Token ein.

Falls eine Anzeige an dem TDMA-Endgerät 182 oder einem anderen Low-Tech-Endgerät nicht möglich oder erwünscht ist, wird das Code-Token 282b dem Anrufer vorgelesen oder per Sprachansage mitgeteilt, und der Anrufer wird aufgefordert, sich die mitgeteilte Zeichenfolge zu notieren. Das Token kann eine spezielle Rufnummer sein oder eine andere Zeichenfolge sein. Bei einem Wiederanruf wählt der Anrufer entweder die spezielle Rufnummer oder gibt per Nachwahl (DTMF) das Token ein. Dieses Verfahren bietet sich auch an, wenn analoge oder öffentliche Telefone als Endgeräte dienen.
Falls der Anrufer dem Agenten zu verstehen gibt, keine Möglichkeit des Notierens zu haben, oder der Anrufer von einem analogen Endgerät 183 oder einem Endgerät, dessen Art nicht festgestellt werden kann, angerufen hat, veranlasst der Agent die Erzeugung des Tokens als Voice-Token 285, das dem Anrufer nicht direkt zugestellt mit. Vielmehr wird der Anrufer aufgefordert, einen für ihn gut merkbaren Satz (Pass-Phrase) 290 zur Identifikation dieses Vorgangs in das Endgerät 183 zu sprechen. Die VRU 126 analysiert diese Sprachprobe und zeichnet sie bzw. die gewonnenen Daten so auf, dass das Voice-Token 285 später wieder eindeutig identifiziert werden kann. Beim Wiederanruf wiederholt der Kunde den bei der Sprachprobe angegebenen Text (Pass-Phrase) 290. Die VRU 126 analysiert diese erneute Sprachprobe und vergleicht sie mit den in den RSTL 226i gespeicherten Sprachproben. Falls die VRU 126 eine Übereinstimmung findet, greift sie auf die in der zutreffenden RSTL 226i abgelegten Token-Verknüpfung zu, wodurch das Voice-Token 285 aktiviert wird. Mit anderen Worten, das Voice-Token 285 verbleibt im Callcenter, und der Anrufer erhält durch Hinterlassen einer Sprachprobe während des ersten Gesprächs später indirekten Zugriff auf das Token, da er über die Sprachprobe später vom System identifiziert und sein Token aktiviert werden kann. Prinzipiell kann dies kann auch mit verstellter Stimme erfolgen, was bei Anwendungen, in denen die Anonymität des Anrufers wichtig ist, besonders attraktiv ist. Diese Methode hat zudem den Vorteil, dass der Kunde einen für ihn leicht zu merkenden Erkennungstext für den Vorgang (z.B. "Mein PC ist kaputt") selbst festlegen kann.

### <Auswertung des Tokens>

Stellt sich im CRC 124 heraus, dass das Token gültig ist, wird die zutreffende Relation (CRR) 224i aufgerufen der Anrufer direkt zum Agenten (bzw. dessen Warteschlage) durchgestellt. Da bei der Rufannahme durch den Agenten das Token im System vorliegt, können die Unterlagen des entsprechenden Vorgangs 222i vom WCS 122 abgeholt und direkt am Bildschirm (Arbeitsplatz 130) des Agenten angezeigt werden.

Mit anderen Worten, beim nächsten Anruf zum selben Vorgang beim Callcenter wird entweder das Token vom Anrufer wieder angegeben bzw. verwendet oder er identifiziert sich mittels Sprache (Abgleich mit der Sprachprobe: z. B. "Mein PC ist kaputt"). Die Verbindung kann so direkt zum richtigen Agenten hergestellt werden und bei diesem automatisch der richtige Vorgang (WTD) 222i aus dem WCS 122 am Arbeitsplatz 130 angezeigt werden. Falls der zuständige Agent z.B. in Urlaub oder krank ist, könnte eine im System eingerichtete Stellvertreter-Regelung greifen. Da der Agent direkt angesprochen wird, wäre es auch möglich:
- einen automatischen Rückruf zu initiieren, falls der zuständige Agent gerade besetzt ist (vorausgesetzt Anonymität ist in dem speziellen Fall nicht gefordert), oder
- eine spezielle Warteschlange für den Agenten einzurichten, damit der Kunde das Freiwerden des Agenten abwarten kann, anstatt bei besetzt abgewiesen zu werden.

Sobald ein Vorgang abgeschlossen ist, kann der Agent das Token für ungültig erklären und ein weiterer Anruf unter Angabe dieses Tokens würde wie ein Anruf ohne Token behandelt und normal in der Warteschlange eingereiht werden. Das Ungültig-Erklären kann natürlich auch automatisch vom System initiiert werden, z.B. beim Schließen eines Vorgangs (Tickets), nach einer bestimmten Zeit ohne erneuten Anruf. Der Agent könnte auch eine Karenzzeit festlegen, für welche das Token noch gültig sein soll, wobei das Token nach Verstreichen der Karenzzeit ohne erneuten Anruf automatisch für ungültig erklärt wird. Mit anderen Worten, der Agent schließt den Workflow ab, da nach bestem Wissen alles erledigt ist, aber er lässt das Token noch eine Zeit lang weiter bestehen, für den Fall, dass doch noch eine Rückfrage vom Kunden kommt. Das Ungültig-Erklären kann dadurch umgesetzt werden, dass die CRR 224i oder der gesamte Vorgang 222i gelöscht wird oder in der CRR 224i oder dem Vorgang 222i eine Vermerk hinterlegt wird, der die Ungültigkeit kennzeichnet.

Das vorstehend beschriebene Verfahren zeichnet sich dadurch aus, dass sowohl eine Identität des Sachbearbeiters (Agenten), als auch des Vorgangs zu einem für den Anrufer nicht weiter zu interpretierenden Token verknüpft werden und dieses dann entweder an den Anrufer (Kunden) weitergegeben werden kann, ohne dass dieser daraus künftig -ohne aktuellen Grund- direkt auf den Agenten zugreifen kann, oder im System verbleibt und der Zugriff darauf indirekt per Sprache erfolgt. Das Token wird typischerweise am Ende der Bearbeitung (des Vorgangs) gelöscht, kann aber auch (z.B. bei Belästigung, Beleidigung) vom Agenten schon vorher für ungültig erklärt werden, um den direkten Weg abzubrechen. Zwar sind Vorgang und Agent über das Token erreichbar, dies jedoch ohne dass eine direkte gegenseitige Beeinflussung von Workflow und Agentenerreichbarkeit vorliegt. Die gerätetechnische Umsetzung setzt auf einer Reihe bekannter technischer Komponenten auf, die um einen neuen "Call Relationship Controller" (CRC 124) ergänzt werden, der die anderen Komponenten im beschriebenen Sinne koordiniert.

Somit ergeben sich folgende Vorteile:
a) Der Agent und seine direkte Rufnummer können anonym bleiben, obwohl der Agent für "seinen" aktuellen Kunden direkt erreichbar ist.
b) Der Kunde kann anonym bleiben, obwohl er "seinen" Agenten direkt erreicht und dieser trotz Anonymität automatisch:
c) die Unterlagen zum aktuellen Vorgang angezeigt bekommen kann (was unter Ausnutzung von z.B. der Anrufer-Nummer nur dann möglich wäre, wenn der Kunde
   i) nicht anonym wäre
   ii) aktuell im selben Callcenter nur einen Vorgang offen hätte und
   iii) er immer unter derselben Anrufer-Nummer identifizierbar wäre.
d) Die direkte Erreichbarkeit kann auch über den Abschluss eines Vorgangs hinaus noch (für eine gewisse Zeit) erhalten bleiben.

Soweit nicht aus Sicherheitsgründen die Authentifizierung des ursprünglich benutzten Endgeräts des Anrufers gewünscht ist, kann das Token (Cookie, URL) auf ein anderes Kommunikationsgerät übertragen werden, um zuzulassen, dass z.B. obwohl der erste Anruf vom Festnetz aus erfolgt ist, die weiteren Anrufe vom mobilen Endgerät aus erfolgen (z.B. via PC / Mobile Sync).

Mit dem erfindungsgemäßen Verfahren können auch Anrufe von Call-Center zu Call-Center in beschriebener Weise abgewickelt werden, bei denen i.d.R. keine Zuordnung von Rufnummer zu Agent zulässig ist.

Da das Verfahren prinzipbedingt vom Übermitteln der Rufnummer des Anrufers unabhängig ist (abgesehen davon, dass man diese Nummer vielleicht zur Erhöhung der Missbrauchssicherheit bewusst mit einbeziehen möchte), funktioniert das erfindungsgemäße Verfahren auch bei Rufnummernunterdrückung des Anrufers (Leistungsmerkmal CLIR).

Die Information kann mit existierenden Mitteln (ISDN, H.323, SIP, http ...) übertragen werden, sodass eine Standardisierung nicht erforderlich ist. Im Sinne einer herstellerübergreifenden Verfügbarkeit der Lösung wäre andererseits eine Standardisierung hilfreich und wünschenswert. Insbesondere wenn Agenten gleichzeitig für mehrere Callcenter tätig sind, könnte hier eine vereinheitlichte Signalisierung Vorteile bringen.

Die Erfindung wurde vorstehend für den Fall eines in einer - auch physischen - Organisationseinheit beschrieben, bei dem alle Agenten in einem lokalen Netz miteinander verbunden sind. Die Erfindung ist auch auf ein sogenanntes Virtuelles Callcenter anwendbar, bei dem alle oder einige Agenten an einem externen Arbeitsplatz, etwa zu Hause oder unterwegs, arbeiten und über das externe Kommunikationsnetz mit dem Server des Callcenters verbunden sind. Auch in diesem Fall werden die Vorteile der Erfindung verwirklicht, und es ist besonders in diesem Fall wichtig, dass die Agenten zwar erreichbar sind, ihre Kontaktdaten aber nicht offengelegt werden. Ein Anruf, der gemäß dem Token einem externen Agenten zugeordnet sind, wird dann für den Anrufer verdeckt an den externen Agenten vermittelt.

Die unter Bezug auf die dargestellten Ausführungsformen beschriebenen Merkmale der Erfindung können auch bei anderen Ausführungsformen der Erfindung vorhanden sein, außer wenn es anders angegeben ist oder sich aus technischen Gründen von selbst verbietet.

### <Liste der Bezugszeichen und Symbole>

- 100: Callcenter
- 110: Lokales Netz (LAN)
- 112: Router
- 114: Firewall
- 116: Telefonvermittlungssystem (PBX)
- 122: Arbeitsablaufsteuerungssystem (WCS)
- 124: Anrufbeziehungssteuerung (CRC)
- 126: Spracherkennungseinheit (VRU)
- 130: Agenten-Arbeitsplatz
- 150: Internet
- 160: TDM-Netz
- 170: Analoges Telefonnetz
- 181: IP-Endgerät
- 182: TDMA-Endgerät
- 183: Analoges Endgerät
- 216i: Agentenvertragsdatei (ACD)
- 222i: Arbeitsablauf- und Transaktionsdatei (WTD) (Vorgang)
- 224i: Anrufbeziehungsdatei (CRR) (Relation)
- 226i: Aufgezeichnete Sprachproben und Token-Verknüpfung (RSTL)
- 281a: Cookie-Token (Cookie)
- 281b: SMS-Token (SMS)
- 282: Code-Token (Zeichenfolge)
- 285: Voice-Token
- 290: Pass-Phrase

- ACD: Agentenvertragsdatei (Agent Contract Data)
- CRC: Anrufbeziehungssteuerung (Call Relationship Controller)
- CRR: Anrufbeziehungsdatei (Call Relationship Repository)
- IP: Internet-Protokoll (Internet Protocol)
- PBX: Telefonvermittlungssystem (Private Branch eXchange)
- RSTL: Aufgezeichnete Sprachproben und Token-Verknüpfung (Recorded Sample and Token Link)
- SMS: Kurznachricht (Short Message System)
- TDMA: Zeitmultiplex (Time Division Multiple Access)
- VRU: Spracherkennungseinheit (Voice Recognition Unit)
- WCS: Arbeitsablaufsteuerungssystem (Workflow Control System)
- WTD: Arbeitsablauf- und Transaktionsdatei (Workflow and Transaction Data)

Die vorstehende Liste ist integraler Bestandteil der Beschreibung.

## Patentansprüche

1. Verfahren zur Verwaltung eines Anrufs eines Anrufers an ein Callcenter (100), wobei das Verfahren die folgenden Schritte umfasst:
- Definieren eines den Anruf entgegennehmenden Agenten des Callcenters (100) als zuständigen Agenten für einen dem Anruf zugeordneten Vorgang (222i);
- Anlegen einer Relation (224i) zwischen dem zuständigen Agenten und dem Vorgang (222i), **gekennzeichnet durch** die folgenden Schritte
- Erzeugen eines Tokens, welches eine Adressierung der Relation ermöglicht, wobei das Token frei von individuellen verbindungs- oder personenbezogenen Daten des zuständigen Agenten ist, wobei die Adressierung für den Anrufer verdeckt ist;
- Verfügbarmachen des Tokens für den Anrufer so, dass das Token bei einer erneuten Kontaktaufnahme des Anrufers mit dem Callcenter (100) aktiviert werden kann;
- Vermitteln des Anrufers zu dem zuständigen Agenten oder einen Stellvertreter, wenn das Token während der erneuten Kontaktaufnahme aktiviert wird.

2. Verfahren gemäß Anspruch 1, **dadurch gekennzeichnet, dass** der Schritt des Verfügbarmachens eine Übermittlung des Tokens an ein Endgerät des Anrufers umfasst, wobei die Aktivierung des Tokens eine Rückübermittlung des Tokens an das Callcenter (100) umfasst.

3. Verfahren gemäß Anspruch 2, **dadurch gekennzeichnet, dass** die Übermittlung des Tokens in Form eines Cookies (281a) erfolgt, wobei das Cookie (281a) auf einem Endgerät des Anrufers gespeichert wird, wobei vorzugsweise eine automatische Rückübermittlung des in dem Cookie (281a) enthaltenen Tokens an das Callcenter (100) bei einem erneuten Anruf des Anrufers erfolgt.

4. Verfahren gemäß Anspruch 2, **dadurch gekennzeichnet, dass** die Übermittlung des Tokens in Form einer SMS (281b) erfolgt, wobei die SMS (281b) zur Aktivierung des Tokens an das Callcenter (100) zurückgesendet wird, wobei vorzugsweise eine Rücksendung der SMS (281b) einen Rückruf des Callcenters (100) beim Anrufer auslöst.

5. Verfahren gemäß Anspruch 2, **dadurch gekennzeichnet, dass** die Übermittlung des Tokens als eine Zeichenfolge (282) in einer an einem Endgerät (182) des Anrufers optisch oder akustisch wahrnehmbaren Form erfolgt, wobei die Rückübermittlung des Tokens bei einem erneuten Anruf des Anrufers in Form einer Eingabe der Zeichenfolge (282) in Text- oder Sprachform am Endgerät (182) des Anrufers durch den Anrufer erfolgt.

6. Verfahren gemäß einem der vorstehenden Ansprüche, **dadurch gekennzeichnet, dass** das Token eine spezielle Rufnummer enthält, die bei einem erneuten Anruf durch den Anrufer zu wählen ist.

7. Verfahren gemäß Anspruch 1, **dadurch gekennzeichnet, dass** der Schritt des Verfügbarmachens die Schritte umfasst:
- Erzeugen des Tokens in Form eines zum Verbleib beim Callcenter (100) bestimmten Voice-Tokens (285);
- Auffordern des Anrufers, eine Sprachprobe zu hinterlassen, wobei die Sprachprobe eine dem Anrufer vorgegebene oder von dem Anrufer selbst gewählte Passphrase (290) enthält; und
- Speichern (226i) der hinterlassenen Sprachprobe zusammen mit einer Verknüpfung zu dem Voice-Token (285) auf der Seite des Callcenters (100),
wobei der Schritt des Aktivierens des Tokens die Schritte umfasst:
- Abfragen der Passphrase (290) von dem Anrufer bei einem erneuten Anruf; und
- Aufrufen der Verknüpfung mit dem Voice-Token (285) auf der Seite des Callcenters (100), wenn die von dem Anrufer bei dem erneuten Anruf gesprochene Passphrase (290) zu der gespeicherten Sprachprobe passt.

8. Verfahren gemäß einem der vorstehenden Ansprüche, **dadurch gekennzeichnet, dass** auf eine Aktivierung des Tokens bei einem erneuten Anruf hin Informationen zu dem Vorgang an den zuständigen Agenten oder den Stellvertreter übermittelt werden.

9. Verfahren gemäß einem der vorstehenden Ansprüche, **dadurch gekennzeichnet, dass** das Token invalidisiert wird, wenn der Vorgang als abgeschlossen gekennzeichnet ist, wobei vorzugsweise eine manuelle Invalidisierung durch den Agenten ermöglicht wird, wobei weiter vorzugsweise die Invalidisierung eine vorgegebene oder durch den Agenten wählbare Karenzzeit berücksichtigt.

10. Vorrichtung zur Verwaltung eines Anrufs eines Anrufers an ein Callcenter (100), die zur Vermittlung eines Anrufs aus wenigstens einem Fernkommunikationsnetz (150, 160, 170) an mehrere Agenten-Arbeitsplätze (130) ausgebildet und eingerichtet ist, **dadurch gekennzeichnet, dass** die Vorrichtung zur Ausführung der Verfahrensschritte des Verfahrens nach einem der vorstehenden Ansprüche ausgebildet und eingerichtet ist.

## Claims

1. A method for managing a call from a caller to a call center (100), wherein the method comprises the following steps:
- Defining an agent of the call center (100) to receive the call as a responsible agent for an incident (222i) assigned to the call;
- Creating a relationship (224i) between the responsible agent and the incident (222i), **characterized by** the following steps
- Generating a token that allows the relationship to be addressed, wherein said token is free of any individual connection or personal data of the responsible agent, wherein said addressing is hidden to the caller;
- Making the token available for the caller such that the token can be activated when the caller resumes contact with the call center (100);
- Connecting the caller with the responsible agent or a proxy if the token is activated when the contact is resumed.

2. The method according to claim 1, **characterized in that** the step of making the token available includes transmitting the token to a terminal of the caller, wherein the activation of the token includes a return transmission of the token to the call center (100).

3. The method according to claim 2, **characterized in that** the token is transmitted in the form of a cookie (281a), wherein said cookie (281a) is stored on a terminal of the caller, wherein the token contained in the cookie (281a) is preferably automatically transmitted back to the call center (100) when the caller calls again.

4. The method according to claim 2, **characterized in that** the token is transmitted in the form of a SMS (281b), wherein said SMS (281b) is transmitted back to the call center (100) for activating the token, wherein said return transmission of the SMS (281b) preferably triggers a call back from the call center (100) to the caller.

5. The method according to claim 2, **characterized in that** the token is transmitted as a character string (282) in a form that can be visually or audibly perceived on a terminal (182) of the caller, wherein, when the caller calls again, the token is transmitted back in the form of a text or voice entry by the caller of the character string (282) on the terminal (182) of the caller.

6. The method according to any one of the preceding claims, **characterized in that** the token contains a special phone number that the caller can select when calling again.

7. The method according to claim 1, **characterized in that** the step of making available includes the following steps:
- Generating the token in the form of a specific voice token (285) that is to remain at the call center (100);
- Prompting the caller to leave a voice sample, wherein said voice sample contains a passphrase (290) either given to, or selected by, the caller.
- Saving (226i) the stored voice sample together with a link to the voice token (285) on the side of the call center (100), wherein the step of activating the token includes the following steps:
- Requesting the passphrase (290) from the caller when calling again; and
- Calling the link to the voice token (285) on the side of the call center (100) if the passphrase (290) spoken by the caller when calling again matches the stored voice sample.

8. The method according to any one of the preceding claims, **characterized in that** information on the incident is transmitted to the responsible agent or to the proxy upon activation of the token when calling again.

9. The method according to any one of the preceding claims, **characterized in that** the token is invalidated if the incident is marked closed, wherein it is preferably possible for the agent to invalidate the token manually, wherein it is further preferred that the invalidation of the token takes place based on a waiting period that is either preset or can be selected by the agent.

10. A device for managing a call from a caller to a call center (100), configured and set up to connect a call from at least one remote communications network (150, 160, 170) to multiple agent workstations (130), **characterized in that** said device is configured and set up to execute the steps of the method according to one of the preceding claims.

## Revendications

1. Procédé d'administration d'un appel d'un appelant à un centre d'appels (100), dans lequel le procédé comprend les étapes suivantes :
- définition d'un agent du centre d'appels (100) répondant à l'appel comme l'agent compétent pour une opération attribuée à l'appel (222i) ;
- création d'une relation (224i) entre l'agent compétent et l'opération (222i), **caractérisé par** les étapes suivantes
- génération d'un jeton, lequel permet un adressage de la relation, dans lequel le jeton est exempt de données individuelles relatives à la connexion ou à la personne de l'agent compétent, dans lequel l'adressage est masqué pour l'appelant ;
- mise à disposition du jeton pour l'appelant de sorte que le jeton puisse être activé lors d'une nouvelle prise de contact de l'appelant avec le centre d'appels (100) ;
- transfert de l'appelant à l'agent compétent ou à un représentant, lorsque le jeton est activé pendant la nouvelle prise de contact.

2. Procédé selon la revendication 1, **caractérisé en ce que** l'étape de mise à disposition comprend une transmission du jeton à un terminal de l'appelant, dans lequel l'activation du jeton comprend une transmission en retour du jeton au centre d'appels (100).

3. Procédé selon la revendication 2, **caractérisé en ce que** la transmission du jeton se fait sous forme de cookie (281a), dans lequel le cookie (281a) est enregistré sur un terminal de l'appelant, dans lequel de préférence une transmission en retour automatique du jeton contenu dans le cookie (281a) au centre d'appels (100) a lieu lors d'un nouvel appel de l'appelant.

4. Procédé selon la revendication 2, **caractérisé en ce que** la transmission du jeton se fait sous forme de SMS (281b), dans lequel le SMS (281b) est renvoyé au centre d'appels (100) pour l'activation du jeton, dans lequel de préférence un renvoi du SMS (281b) déclenche un rappel du centre d'appels (100) auprès de l'appelant.

5. Procédé selon la revendication 2, **caractérisé en ce que** la transmission du jeton se fait en tant que chaîne de caractères (282) dans une forme perceptible visuellement ou acoustiquement au niveau d'un terminal (182) de l'appelant, dans lequel la transmission en retour du jeton se fait lors d'un nouvel appel de l'appelant sous la forme d'une saisie de la chaîne de caractères (282) sous forme textuelle ou vocale au niveau du terminal (182) de l'appelant par l'appelant.

6. Procédé selon l'une quelconque des revendications précédentes, **caractérisé en ce que** le jeton contient un numéro d'appel spécial, qui doit être composé lors d'un nouvel appel par l'appelant.

7. Procédé selon la revendication 1, **caractérisé en ce que** l'étape de mise à disposition comprend les étapes de :
- génération du jeton sous forme de jeton vocal (285) destiné à rester au centre d'appels (100) ;
- invitation de l'appelant à laisser un échantillon vocal, dans lequel l'échantillon vocal contient une phrase de chiffrement (290) donnée à l'appelant ou choisie par l'appelant lui-même ; et
- enregistrement (226i) de l'échantillon vocal laissé conjointement avec un lien vers le jeton vocal (285) du côté du centre d'appels (100),
dans lequel l'étape d'activation du jeton comprend les étapes de :
- demande de la phrase de chiffrement (290) à l'appelant lors d'un nouvel appel ; et
- appel du lien vers le jeton vocal (285) du côté du centre d'appels (100), lorsque la phrase de chiffrement (290) prononcée par l'appelant lors du nouvel appel correspond à l'échantillon vocal enregistré.

8. Procédé selon l'une quelconque des revendications précédentes, **caractérisé en ce que** des informations sur l'opération sont transmises à l'agent compétent ou au représentant après une activation du jeton lors d'un nouvel appel.

9. Procédé selon l'une quelconque des revendications précédentes, **caractérisé en ce que** le jeton est invalidé, lorsque l'opération est marquée comme terminée, dans lequel de préférence une invalidation manuelle par l'agent est permise, dans lequel en outre de préférence l'invalidation tient compte d'un temps de carence donné ou sélectionnable par l'agent.

10. Dispositif d'administration d'un appel d'un appelant à un centre d'appels (100), qui est réalisé ou aménagé pour le transfert d'un appel d'au moins un réseau de communication à distance (150, 160, 170) à plusieurs postes de travail d'agents (130), **caractérisé en ce que** le dispositif est réalisé et aménagé pour la réalisation des étapes de procédé du procédé selon l'une quelconque des revendications précédentes.
